# EUROPÄISCHE PATENTSCHRIFT

(11) **EP 3 308 644 B1**
(45) Veröffentlichungstag und Bekanntmachung des Hinweises auf die Patenterteilung: **12.04.2023**
(21) Anmeldenummer: 17203963.8
(22) Anmeldetag: 02.11.2016
(51) Int. Cl.: A01M 7/00

(54) **REGEL- UND/ODER STEUERSYSTEM FÜR EINE LANDWIRTSCHAFTLICHE MASCHINE**
REGULATION AND/OR CONTROL SYSTEM FOR AN AGRICULTURAL MACHINE
SYSTÈME DE COMMANDE ET/OU DE RÉGLAGE D'UNE MACHINE AGRICOLE

(30) Priorität: 06.11.2015 DE 102015119145
(43) Veröffentlichungstag der Anmeldung: 18.04.2018
(62) Teilanmeldung aus: 16401082.9
(73) Patentinhaber: Amazonen-Werke H. Dreyer SE & Co. KG, 49205 Hasbergen (DE)
(72) Erfinder: GROßE PRUES, Frank, 49593 Bersenbrück (DE); HEER, Jochen, 49074 Osnabrück (DE)

(56) Entgegenhaltungen:
- EP-A1- 2 186 405
- WO-A1-2015/025015
- DE-A1- 4 140 254
- DE-T2-602004 004 297

## Beschreibung

Die Erfindung bezieht sich auf ein Regel- und/oder Steuersystem für eine landwirtschaftliche Maschine mit den Merkmalen des Oberbegriffs des Anspruchs 1. Die Erfindung bezieht sich ferner auf eine landwirtschaftliche Maschine mit einem solchen System sowie auf ein Verfahren zum Betreiben einer landwirtschaftlichen Maschine. Darüber hinaus betrifft die Erfindung ein Verfahren zum Betreiben einer landwirtschaftlichen Maschine gemäß dem Oberbegriff des Patentanspruchs 17.

Ein Regel- und/oder Steuersystem der eingangs genannten Art ist beispielsweise aus WO 2015/025015 A1 bekannt. Aus der Druckschrift DE 60 2004 004297 T2 ist ein Verfahren zur Rollregelung eines aufgehängten Gestänges bekannt.

Bei landwirtschaftlichen Maschinen mit einem Verteilergestänge zum Ausbringen von Material, wie Düngemittel, Pflanzenschutzmittel oder Saatgut, die beispielsweise als Feldspritzen ausgebildet sind, besteht die Anforderung, dass das Verteilergestänge möglichst parallel zum Boden oder zum Pflanzenbestand geführt wird, um eine gleichmäßige Ausbringung des Materials zu erreichen. In die Regelung gehen Störgrößen ein, die sich aus Relativbewegungen der Maschine bezogen auf das Verteilergestänge und den daraus resultierenden Kräften ergeben. Bisherige Gestängeführungssysteme waren auf eine passive Entkopplung des Verteilergestänges von den Maschinenbewegungen mit Feder- und Dämpfersystemen ausgelegt. Eine langsame Anpassung der Gestängeneigung an die Geländekontur wurde über aktive Stellelemente erreicht.

WO 2015/025015 A1 bildet eine Weiterentwicklung dieses Standes der Technik und beschreibt eine Gestängeführung für eine landwirtschaftliche Maschine, bei der die parallele Ausrichtung des Gestänges bezogen auf den Boden bzw. eine Pflanzenoberfläche durch eine autonome Regelung erreicht wird. Dazu weist das Verteilergestänge mehrere Ultraschallsensoren auf, die kontinuierlich den Abstand zwischen dem Gestänge und dem Boden messen. Auf der Basis dieser Abstandssignale wird eine positionsgesteuerte Führung der beiden schwenkbeweglichen Auslegerarme der Maschine erreicht. Dabei besteht das Problem, dass schlanke Hindernisse wie beispielsweise Stangen von der autonomen Abstandsregelung nicht erfasst werden. Deshalb sieht WO 2015/025015 A1 eine manuelle Steuerung vor, die eine temporäre Schwenkung der Auslegerarme ermöglicht. Bei Aktivierung der manuellen Steuerung wird die autonome Regelung zeitlich solange unterbrochen, bis der Eingriff durch die manuelle Steuerung abgeschlossen ist. Dann kehrt das System zur autonomen Regelung zurück.

Bei der manuellen Steuerung wird eine Soll-Position für wenigstens einen der beiden schwenkbeweglichen Auslegerarme bezogen auf die Bodenfläche manuell gesteuert vorgegeben. Die manuelle Steuerung ist bei der bekannten Gestängeführung auf die Verstellung jeweils eines Schwenkarmes eingeschränkt.

Der Erfindung liegt die Aufgabe zu Grunde, ein Regel- und/oder Steuersystem für eine landwirtschaftliche Maschine anzugeben, bei der ein sicherer und präziser Eingriff in die automatische Regelung des Verteilergestänges möglich ist. Der Erfindung liegt ferner der Aufgabe zu Grunde, eine landwirtschaftliche Maschine mit einem solchen System und ein Verfahren zum Betreiben einer landwirtschaftlichen Maschine anzugeben.

Mit Blick auf das Regel- und/oder Steuersystem wird die Aufgabe durch den Gegenstand des Anspruchs 1 gelöst. Mit Blick auf die landwirtschaftliche Maschine wird die Aufgabe durch den Gegenstand des Anspruchs 16 gelöst. Hinsichtlich des Verfahrens wird die Aufgabe durch den Gegenstand des Anspruches 17 gelöst.

Die Erfindung beruht darauf, ein Regel- und/oder Steuersystem für eine landwirtschaftliche Maschine anzugeben, die ein Verteilergestänge zum Ausbringen von Material, wie Düngemittel, Pflanzenschutzmittel oder Saatgut aufweist, das um eine mittig zum Verteilergestänge angeordnete und in Fahrtrichtung verlaufende Drehachse verschwenkbar ist.

Das Regel- und/oder Steuersystem weist wenigstens eine Sensoreinrichtung zur Ermittlung des Boden- und/oder Pflanzenabstands vom Verteilergestänge auf. Das System weist ferner eine Datenverarbeitungseinrichtung zur Verarbeitung der Sensorsignale auf. Die Datenverarbeitungseinrichtung ist für einen Automatikmodus und für einen Übersteuerungsmodus, insbesondere einen manuellen Übersteuerungsmodus, jeweils zur Höhen- und/oder Neigungsverstellung des Verteilergestänges konfiguriert. Die Neigungsverstellung des Verteilergestänges erfolgt erfindungsgemäß wenigstens im Übersteuerungsmodus der Datenverarbeitungseinrichtung auf der Basis des Winkels zwischen der Maschine und dem Verteilergestänge, und die Höhenverstellung des Verteilergestänges erfolgt erfindungsgemäß auf der Basis des vertikalen Abstands zwischen der Maschine und dem Verteilergestänge. Dazu wird das Verteilergestänge um die mittig zum Verteilergestänge angeordnete und in Fahrtrichtung verlaufende Drehachse verschwenkt bzw. das Verteilergestänge insgesamt, d.h. über die gesamte Länge vertikal angehoben bzw. abgesenkt.

Im Übersteuerungsmodus übersteuert die Datenverarbeitungseinrichtung wenigstens einen Regelparameter des Automatikmodus, insbesondere durch eine manuelle Eingabe. Übersteuerung bedeutet, dass der Automatikmodus im Übersteuerungsmodus aktiv ist bzw. aktiv bleibt, wenn dem Automatikmodus der Übersteuerungsmodus zugeschaltet wird. Mit anderen Worten wird ein Regelparameter des Automatikmodus im Übersteuerungsmodus gezielt verändert, um dem Anwender der Maschine eine Eingriffsmöglichkeit in die automatische Regelung zu geben, bspw. zur Kollisionsvermeidung.

Bei der Übersteuerung handelt es sich vorzugsweise um eine manuelle Übersteuerung, also ein Übersteuerung die durch eine manuelle Eingabe eines Anwenders zumindest ausgelöst wird. Die manuelle Übersteuerung kann auch die Einstellung des Steuerungsverhaltens durch den Anwender beinhalten. Bei dem Automatikmodus handelt es sich um die Regelung im Normalbetrieb der Maschine.

Durch die Übersteuerung bei aktivem Automatikmodus wird erreicht, dass die aktive Entkopplung der Bewegungen des Verteilergestänges von den Bewegungen der Maschine erhalten bleibt, selbst wenn ein Eingriff, insbesondere ein manueller Eingriff, in die automatische Regelung erfolgt. Damit kann bspw. auf eine Fahrsituation reagiert werden, die im Automatikmodus nicht oder nicht ausreichend gut bewältigt werden kann, ohne dass dabei die automatische Regelung des Verteilergestänges und damit die Entkoppelung aufgegeben wird.

Damit ist ein präziser und somit sicherer Eingriff in die automatische Regelung möglich.

Bei der erfindungsgemäßen Ausführung der Erfindung ist vorgesehen, dass das Regel- oder Steuersystem wenigstens eine Sensoreinrichtung zur Ermittlung des Winkels zwischen der Maschine und dem Verteilergestänge und/oder eine Sensoreinrichtung zur Ermittlung des vertikalen Abstands zwischen der Maschine und dem Verteilergestänge aufweist. Die Höhen- und/oder Neigungsverstellung des Verteilergestänges erfolgt wenigstens im Übersteuerungsmodus der Datenverarbeitungseinrichtung auf der Basis des Winkels zwischen der Maschine und dem Verteilergestänge und/oder auf der Basis des vertikalen Abstands zwischen der Maschine und dem Verteilergestänge.

Dies bietet die Voraussetzung dafür, dass die manuelle Übersteuerung unabhängig vom Abstand zwischen dem Verteilergestänge und dem Boden bzw. dem Bestand erfolgt. Dazu ist vorgesehen, dass der Winkel zwischen der Maschine und dem Verteilergestänge erfasst und dementsprechend die Verstellung der Neigung des Verteilergestänges im manuellen Übersteuerungsmodus auf der Basis dieses Winkels erfolgt. Zusätzlich oder alternativ wird der Abstand zwischen der Maschine und dem Verteilergestänge in Höhenrichtung, d.h. der vertikale Abstand erfasst, so dass die manuelle Übersteuerung auf der Basis des vertikalen Abstands zwischen der Maschine und dem Verteilergestänge erfolgen kann. Auch hier gilt, dass der Eingriff in die Automatikregelung zur Verstellung der Lage des Verteilergestänges präziser und sicherer erfolgt als im Stand der Technik, bei dem das jeweilige Bodenprofil Einfluss hat.

In vorteilhafter Weise ist ein Regel- und/oder Steuersystem für eine landwirtschaftliche Maschine vorgesehen mit einem Verteilergestänge zum Ausbringen von Material, wie Düngemittel, Pflanzenschutzmittel oder Saatgut, mit wenigstens einer Sensoreinrichtung zur Ermittlung des Boden- und/oder Pflanzenabstands vom Verteilergestänge und einer Datenverarbeitungseinrichtung zur Verarbeitung der Sensorsignale, wobei die Datenverarbeitungseinrichtung für einen Automatikmodus und einen Übersteuerungsmodus, insbesondere einen manuellen Übersteuerungsmodus, jeweils zur Höhen- und/oder Neigungsverstellung des Verteilergestänges konfiguriert ist.

Das System weist wenigstens eine Sensoreinrichtung zur Ermittlung der Drehrate des Verteilergestänges auf. Zusätzlich oder alternativ weist das System eine Sensoreinrichtung zur Ermittlung der translatorischen Vertikalgeschwindigkeit des Verteilergestänges auf. Die Höhen- und/oder Neigungsverstellung des Verteilergestänges erfolgt erfindungsgemäß wenigstens im Übersteuerungsmodus der Datenverarbeitungseinrichtung auf der Basis der Drehrate des Verteilergestänges und/oder auf der Basis der translatorischen Vertikalgeschwindigkeit des Verteilergestänges.

Das Regel- und/oder Steuersystem weist also entweder wenigstens eine Sensoreinrichtung zur Ermittlung der Drehrate des Verteilergestänges oder eine Sensoreinrichtung zur Ermittlung der translatorischen Vertikalgeschwindigkeit des Verteilergestänges auf. Es ist auch möglich, dass das erfindungsgemäße Regel-oder Steuersystem wenigstens eine Sensoreinrichtung zur Ermittlung der Drehrate des Verteilergestänges und eine Sensoreinrichtung zur Ermittlung der translatorischen Vertikalgeschwindigkeit des Verteilergestänges aufweist. Die Drehrate oder Vertikalgeschwindigkeit kann auch mittels Linear- und/oder Drehbeschleunigungssensoren, vorzugsweise durch zeitliche Integration des jeweiligen Signals, bestimmt werden.

Die Sensoreinrichtung zur Ermittlung der Drehrate des Verteilergestänges und/oder die Sensoreinrichtung zur Ermittlung der translatorischen Vertikalgeschwindigkeit des Verteilergestänges können sowohl im Automatikmodus als auch im Übersteuerungsmodus verwendet werden.

Mit Hilfe der Sensoreinrichtung zur Ermittlung der Drehrate des Verteilergestänges erfolgt im Übersteuerungsmodus der Datenverarbeitungseinrichtung die Neigungsverstellung des Verteilergestänges auf der Basis der Drehrate. Mittels der Sensoreinrichtung zur Ermittlung der translatorischen Vertikalgeschwindigkeit des Verteilergestänges erfolgt die Höhenverstellung des Verteilergestänges im Übersteuerungsmodus der Datenverarbeitungseinrichtung auf der Basis der translatorischen Vertikalgeschwindigkeit des Verteilergestänges.

Dies hat den Vorteil, dass die Übersteuerung der Regelung unabhängig vom jeweiligen Bodenprofil erfolgen kann. Mit anderen Worten bietet die Erfindung die Möglichkeit, das Verteilergestänge im Übersteuerungsmodus der Datenverarbeitungseinrichtung so zu verstellen, dass der Abstand zwischen dem Verteilergestänge und dem Boden bzw. der Pflanzendecke die Übersteuerung nicht beeinflusst. Die Übersteuerung erfolgt daher präziser und ist somit sicherer als im Stand der Technik.

Dazu wird nicht, wie im Stand der Technik, ausschließlich auf der Basis der Signale der Abstandssensoren gesteuert. Vielmehr wird entweder die Drehrate des Verteilergestänges und/oder die translatorische Vertikalgeschwindigkeit des Verteilergestänges, also die lineare Geschwindigkeit des Verteilergestänges in Höhenrichtung für die manuelle Steuerung verwendet. Es ist auch möglich, die beiden Werte, also Drehrate und Vertikalgeschwindigkeit zusammen für die Steuerung zu verwenden.

Die Verwendung der Drehrate und/oder der Vertikalgeschwindigkeit eröffnet verschiedene Möglichkeiten, die manuelle Übersteuerung individuell anzupassen, beispielsweise durch eine Änderung der Drehrate bzw. Vertikalgeschwindigkeit.

Dabei ist nicht ausgeschlossen, dass auch Bodenabstandssignale für die manuelle Übersteuerung zusätzlich zur Drehrate und/oder Vertikalgeschwindigkeit verwendet werden.

Bevorzugte Ausführungen der Erfindung sind in den Unteransprüchen angegeben.

Vorzugsweise sind im Automatikmodus wenigstens zwei unterschiedliche Regel-parameter vorgesehen. Einer der beiden Regelparameter wird im Übersteuerungsmodus übersteuert. Dies hat den Vorteil, dass der andere Regelparameter von der Übersteuerung unbeeinflusst bzw. unverändert für die automatische Regelung zur Verfügung steht. Mehr als zwei Regelparameter sind möglich.

Weiter vorzugsweise weist das System wenigstens eine Sensoreinrichtung zur Ermittlung der Drehrate des Verteilergestänges und/oder eine Sensoreinrichtung zur Ermittlung der translatorischen Vertikalgeschwindigkeit des Verteilergestänges auf, wobei die Höhen- und/oder Neigungsverstellung des Verteilergestänges wenigstens im Übersteuerungsmodus der Datenverarbeitungseinrichtung auf der Basis der Drehrate des Verteilergestänges und/oder auf der Basis der translatorischen Vertikalgeschwindigkeit des Verteilergestänges erfolgt. Die Drehrate oder Vertikalgeschwindigkeit kann auch mittels Linear- und/oder Drehbeschleunigungssensoren, vorzugsweise durch zeitliche Integration des jeweiligen Signals, bestimmt werden.

Die Datenverarbeitungseinrichtung kann einen Sollwert des Winkels zwischen dem Verteilergestänge und der Boden- oder Pflanzenoberfläche im Automatikmodus bei einer Aktivierung des Übersteuerungsmodus um eine vorgegebene Drehrate des Verteilergestänges ändern. Der im Automatikmodus vorgegebene Winkelsollwert wird also im Übersteuerungsmodus mit einer bestimmten Geschwindigkeit, d.h. mit einer bestimmten Drehrate verändert, bspw. um 0,1° pro Sekunde. Bei dieser Ausführung geht zwar das Bodenprofil bzw. das Profil der Pflanzenoberfläche in die Steuerung ein. Die Steuerung berücksichtigt aber nicht ausschließlich den Bodenabstand bzw. Pflanzenabstand, sondern erfolgt auf der Basis einer vorgegebenen Drehrate, die wiederum individuell einstellbar ist, so dass die Präzision der Steuerung bei der Kollisionsvermeidung verbessert wird.

Die Datenverarbeitungseinrichtung kann im Übersteuerungsmodus einen Sollwert des Abstands zwischen dem Verteilergestänge und der Boden- oder Pflanzenoberfläche um eine vorgegebene translatorische Vertikalgeschwindigkeit des Verteilergestänges ändern. Hier gilt dasselbe wie im Zusammenhang mit der Winkeländerung um eine vorgegebene Drehrate im vorangegangenen Ausführungsbeispiel. Auch hier wird die Präzision der Übersteuerung verbessert. Eine Kombination der Sollwert-Änderung um die Drehrate bzw. um die Vertikalgeschwindigkeit ist möglich, so dass eine kombinierte Neigungs- und Höhenverstellung des Verteilergestänges geschaffen wird.

Bei einem weiteren Ausführungsbeispiel setzt die Datenverarbeitungseinrichtung im Übersteuerungsmodus einen Sollwert der Drehrate auf einen Wert, der von null verschieden ist. Im Unterschied zum Sollwert der Regelung im Automatikmodus, der zur Vermeidung von Gestängebewegungen auf Null gesetzt ist, wird im manuellen Übersteuerungsmodus eine gezielte Neigungsverstellung des Verteilergestänges gewünscht. Dazu wird der Sollwert der Drehrate auf einen Wert gesetzt, der von Null verschieden ist, der also größer oder kleiner Null ist. Bei dieser Ausführung erfolgt die manuelle Übersteuerung unabhängig von der Bodenbeschaffenheit. Die Einstellung des Sollwertes der Drehrate gibt dem Bediener die Möglichkeit, auf unterschiedliche Situationen flexibel zu reagieren.

Bei einer weiteren Ausführung setzt die Datenverarbeitungseinrichtung im manuellen Übersteuerungsmodus einen Sollwert der translatorischen Vertikalgeschwindigkeit auf einen Wert, der von Null verschieden ist, der also größer oder kleiner Null ist. Auch diese Ausführung erlaubt eine manuelle Übersteuerung unabhängig vom Bodenprofil bzw. der Pflanzendecke. Die manuelle Neigungsübersteuerung und die manuelle Höhenübersteuerung der vorstehend genannten Ausführungsbeispiele können separat oder kombiniert verwendet werden.

Die Datenverarbeitungseinrichtung kann nach einer Deaktivierung des manuellen Übersteuerungsmodus in den Automatikmodus wechseln. Damit wird der manuelle Übersteuerungsmodus beendet. Dies kann beispielsweise dadurch erfolgen, dass ein Bediener des Systems eine manuelle Eingabeeinrichtung, wie beispielsweise einen Softkey am Eingabeterminal im manuellen Übersteuerungsmodus gedrückt hält. Sobald die manuelle Eingabeeinrichtung nicht mehr gedrückt wird, ist der manuelle Übersteuerungsmodus beendet und das System kehrt automatisch in den Automatikmodus zurück.

Bei einem weiteren Ausführungsbeispiel der Erfindung weist die Datenverarbeitungseinrichtung wenigstens zwei Regelkreise auf, von denen insbesondere ein zweiter Regelkreis eine langsamere Regelung als ein erster Regelkreis bildet. Ein Sollwert des zweiten Regelkreises ist im Übersteuerungsmodus einstellbar. Die Ausführung hat den Vorteil, dass alle Regelparameter im Automatikmodus aktiv bleiben, wenn eine Übersteuerung erfolgt. Kurzfristige Lageänderungen des Verteilergestänges werden durch den ersten Regelkreis bewirkt, der schneller als der zweite Regelkreis arbeitet. Vergleichsweise schnelle Lageänderungen der Maschine, beispielsweise durch Bodenunebenheiten, werden somit durch den ersten Regelkreis kompensiert und dementsprechend nicht auf das Gestänge übertragen. Der zweite Regelkreis, der dem ersten Regelkreis überlagert ist, wird aufgrund seiner im Vergleich zum ersten Regelkreis langsameren Regelung dazu verwendet, einen Eingriff des Bedieners in die Regelung durch eine manuelle Übersteuerung zu ermöglichen.

Dabei kann der erste Regelkreis die Sensoreinrichtung zur Ermittlung der Drehrate des Verteilergestänges aufweisen. Der zweite Regelkreis kann eine Sensoreinrichtung zur Ermittlung des Winkels zwischen der Maschine und dem Verteilergestänge und/oder eine Sensoreinrichtung zur Ermittlung des vertikalen Abstands zwischen der Maschine und dem Verteilergestänge aufweisen. Damit ist die Voraussetzung geschaffen, dass die Übersteuerung unabhängig vom jeweiligen Bodenprofil bzw. vom Bestand erfolgt.

Der erste Regelkreis kann einen Sollwert der Drehrate verwenden, der null entspricht. Damit arbeitet der erste Regelkreis im Automatikmodus. Der zweite Regelkreis kann einen Mittelwert des Winkels zwischen der Maschine und dem Verteilergestänge und/oder einen Mittelwert des vertikalen Abstands zwischen der Maschine und dem Verteilergestänge verwenden, der von null verschieden ist. Der zweite Regelkreis wird somit für den manuellen Übersteuerungsmodus verwendet.

Vorzugsweise ist die Sensoreinrichtung zur Ermittlung des Boden- und/oder Pflanzenabstands, insbesondere Ultraschallsensoren, im Übersteuerungsmodus aktiv, bspw. zur zusätzlichen Kollisionsvermeidung.

Bei einer weiteren bevorzugten Ausführung weist die Datenverarbeitungseinrichtung verschiedene Übersteuerungsmodi auf, die wählbar sind. Dem Bediener wird damit eine noch größere Flexibilität eingeräumt, auf Kollisionssituationen zu reagieren, indem der jeweils für die jeweilige Situation passende manuelle Übersteuerungsmodus gewählt wird.

Im Rahmen der Erfindung wird ferner eine landwirtschaftliche Maschine zum Ausbringen von Material, wie Düngemittel, Pflanzenschutzmittel oder Saatgut, mit einem Verteilergestänge und einem Regel- und/oder Steuersystem nach einem der vorhergehenden Ausführungsformen beansprucht. Die landwirtschaftliche Maschine kann eine gezogen, eine selbstfahrende oder eine getragene Maschine sein. In einer besonders bevorzugten Ausführung ist die Maschine als Feldspritze ausgebildet.

Bei dem erfindungsgemäßen Verfahren zum Betreiben einer landwirtschaftlichen Maschine wird Material, wie Düngemittel, Pflanzenschutzmittel oder Saatgut, aus einem Vorratsbehälter durch ein Verteilergestänge ausgebracht, wobei im Automatikmodus die Gesamthöhe und/oder Gesamtneigung des Verteilergestänges verstellt und im Übersteuerungsmodus wenigstens einen Regelparameter des Automatikmodus übersteuert, insbesondere manuell übersteuert wird. Der Automatikmodus ist im Übersteuerungsmodus aktiv.

Bei dem Automatikmodus handelt es sich um die Regelung im Normalbetrieb der Maschine.

Das Verfahren kann in vorteilhafter Weise so ausgestaltet sein, dass im Übersteuerungsmodus die Neigung des Verteilergestänges auf der Basis des Winkels zwischen der Maschine und dem Verteilergestänge verstellt wird. Zusätzlich oder alternativ kann die Höhe des Verteilergestänges im Übersteuerungsmodus auf der Basis des vertikalen Abstands zwischen der Maschine und dem Verteilergestänge verstellt werden.

Vorteilhaft ist weiter ein Verfahren zum Betreiben einer landwirtschaftlichen Maschine vorgesehen, das die Verstellung der Höhe und/oder Neigung des Verteilergestänges sowohl in einem Automatikmodus als auch einem Übersteuerungsmodus ermöglicht. Im Übersteuerungsmodus wird die Neigung auf der Basis der Drehrate des Verteilergestänges verstellt. Zusätzlich oder alternativ wird im Übersteuerungsmodus die Höhe des Verteilergestänges auf der Basis der translatorischen Vertikalgeschwindigkeit des Verteilergestänges verstellt. Das Verfahren bietet die Voraussetzung dafür, dass die manuelle Übersteuerung unabhängig vom jeweiligen Bodenprofil bzw. von der Pflanzendecke erfolgt.

Die Erfindung wird nachfolgend unter Bezugnahme auf die beigefügten schematischen Zeichnungen mit weiteren Einzelheiten näher erläutert.

In diesem zeigen
- Fig. 1: eine Heckansicht einer landwirtschaftlichen Maschine mit einem Regel- und Steuersystem nach einem erfindungsgemäßen Ausführungsbeispiel;
- Fig. 2: ein Flussdiagramm einer Neigungsregelung nach einem ersten erfindungsgemäßen Ausführungsbeispiel;
- Fig. 3: ein Flussdiagramm einer Neigungsregelung nach einem zweiten erfindungsgemäßen Ausführungsbeispiel; und
- Fig. 4: ein Flussdiagramm einer Neigungsregelung nach einem dritten erfindungsgemäßen Ausführungsbeispiel.

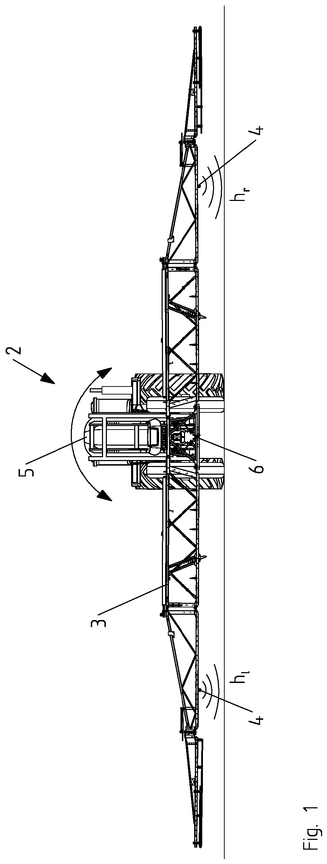

Fig. 1 zeigt in schematischer Weise eine Heckansicht einer landwirtschaftlichen Maschine 2, die als Feldspritze ausgebildet ist. Die Maschine kann von einem Zugfahrzeug gezogen werden, selbstfahrend sein oder an ein Fahrzeug angebaut sein. Die Maschine weist ein Verteilergestänge 3 auf, das mit einem Vorratsbehälter 5 für die Zufuhr des auszubringenden Materials verbunden ist. Bei dem Material kann es sich um Pflanzenschutzmittel, Saatgut oder Düngemittel handeln. Das Verteilergestänge 3 weist in an sich bekannter Weise Düsen auf, die an der Unterseite des Verteilergestänges 3 verteilt angeordnet sind. Die Düsen sind durch ein ebenfalls an sich bekanntes Schlauchsystem mit einer Pumpe und dem Vorratsbehälter 5 verbunden.

Das Verteilergestänge 3 ist zentral am Rahmen der Maschine aufgehängt und um eine in Fahrtrichtung weisende Drehachse verschwenkbar. Damit ist eine Verstellung der Gesamtneigung des Verteilergestänges 3, also eine Verstellung des ausgeklappten, geraden Verteilergestänges 3 möglich.

Alternativ kann das Verteilergestänge 3 ein drehfest angeordnetes Mittelteil aufweisen, an dem jeweils ein Auslegerarm verschwenkbar angelenkt ist. Ein Beispiel hierfür ist in der WO 2015/025015 A1 beschrieben. Die beiden Schwenkarme sind in diesem Fall jeweils um eine parallel zur in Fahrtrichtung weisenden Mittelachse des Fahrzeugs verschwenkbar.

Zudem kann alternativ das Verteilergestänge um eine im Wesentlichen in Fahrtrichtung weisende Achse drehbar aufgehängt sein und zusätzlich über zwei Auslegerarme verfügen, welche über Stellelemente individuell angewinkelt werden können.

Das Verteilergestänge 3 ist überdies höhenverstellbar. Dazu kann das Verteilergestänge an einem vertikal bewegbaren Hubrahmen befestigt sein. Alternativ kann ein Parallelogramm-Gestänge vorgesehen sein, um die Höhenlage zu verstellen.

Als Aktoren für die Neigungs- und Höhenverstellung kommen Hydrauliksysteme oder andere Stellsysteme in Frage.

Die Erfindung ist nicht auf eine bestimmte Mechanik zur Neigungsverstellung bzw. zur Höhenverstellung des Verteilergestänges eingeschränkt.

Die Maschine gemäß Fig. 1 weist Sensoreinrichtungen zur Erfassung des Abstandes zwischen dem Verteilergestänge 3 und dem Boden bzw. dem Verteilergestänge 3 und der Pflanzendecke auf. Die Sensoreinrichtungen zur Abstandsmessung können beispielsweise Ultraschallsensoren sein. Andere Sensoren zur Abstandsmessung sind möglich. Bei dem Beispiel gemäß Fig. 1 sind zwei Abstandssensoren 4 zur Messung der linken und rechten Höhe hl, hr des Verteilergestänges 3 bezogen auf den Boden vorgesehen. Konkret handelt es sich hierbei um die vorstehend bereits angesprochenen Ultraschallsensoren. Andere Abstandssensoren sind möglich.

Eine weitere Sensoreinrichtung erfasst die Drehrate des Verteilergestänges bei einer Drehbewegung um die in Fahrtrichtung verlaufende Mittelachse bzw. Drehachse. Konkret ist die Sensoreinrichtung zur Erfassung der Drehrate als Drehratensensor 6 ausgebildet. Bei einem mittig aufgehängten Verteilergestänge 3 kann ein einziger Drehratensensor genügen, der die Winkelgeschwindigkeit bei einer Drehbewegung des Verteilergestänges 3 misst. Bei einem Verteilergestänge gemäß WO 2015/025015 A1 mit einem drehfesten Mittelteil und schwenkbaren Auslegerarmen wird zweckmäßigerweise jedem Auslegerarm ein eigener Drehratensensor zugeordnet.

Die landwirtschaftliche Maschine 2 weist ein Regel- und Steuersystem auf (nicht dargestellt). Das System umfasst eine Datenverarbeitungseinrichtung zur Verarbeitung der Sensorsignale aus der Sensoreinrichtung zur Ermittlung des Boden-und/oder Pflanzenabstandes vom Verteilergestänge und wenigstens eine weitere Sensoreinrichtung, bspw. einer Sensoreinrichtung zur Ermittlung der Drehrate des Verteilergestänges. Die Datenverarbeitungseinrichtung ist für einen Automatikmodus und einen Übersteuerungsmodus, insbesondere einen manuellen Übersteuerungsmodus, konfiguriert, die jeweils eine Höhen- und/oder Neigungsverstellung des Verteilergestänges (3) ermöglichen.

Wenn das Verteilergestänge 3 insgesamt um eine mittige Drehachse verschwenkbar bzw. insgesamt anhebbar/absenkbar ist, kann die Datenverarbeitungseinrichtung im Automatikmodus die Gesamthöhe und/oder Gesamtneigung des Verteilergestänges verstellen und im Übersteuerungsmodus wenigstens einen Regelparameter des Automatikmodus übersteuern, insbesondere manuell übersteuert. Der Automatikmodus ist dabei im Übersteuerungsmodus aktiv.

Bei der Datenverarbeitungseinrichtung kann es sich um einen an sich bekannten Job-Rechner bzw. um entsprechende Software handeln, die entsprechend konfiguriert ist.

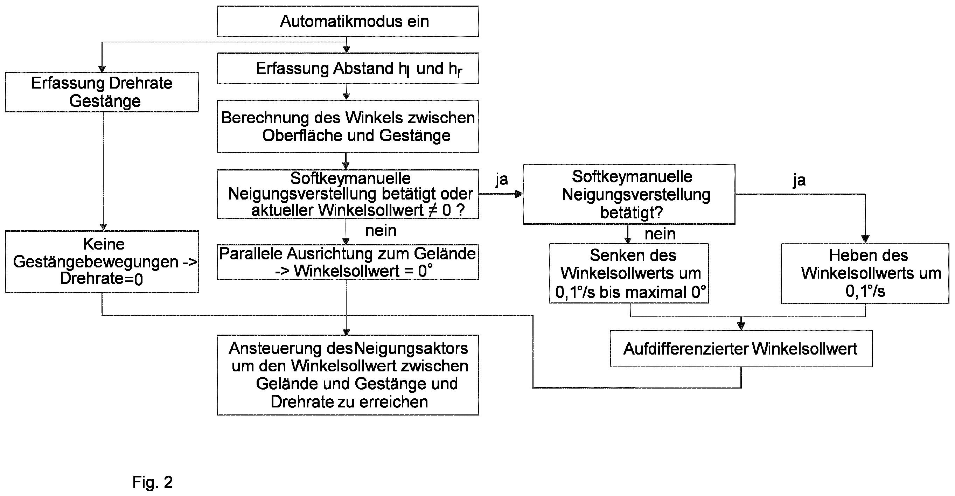

Wie anhand der Fig. 2-4 in Zusammenhang mit verschiedenen Ausführungsbeispielen beschrieben, ermöglicht die Datenverarbeitungseinrichtung den Betrieb der Maschine in einem Automatikmodus und einem manuellen Übersteuerungsmodus. Der manuelle Übersteuerungsmodus dient der Übersteuerung, um in speziellen Situationen, insbesondere zur Vermeidung von Kollisionen, dem Bediener die Möglichkeit zu geben, in die automatische Regelung der Maschine einzugreifen.

Die Ausführungsbeispiele 1-3 basieren jeweils darauf, dass die Neigungsverstellung des Verteilergestänges 3 im manuellen Übersteuerungsmodus auf der Basis der Drehrate des Verteilergestänges 3 erfolgt. Die Drehrate kann auf unterschiedliche Weise in die manuelle Steuerung eingehen, wie anhand der Beispiele 1-3 erläutert. Außerdem ermöglichen die Ausführungsbeispiele 1-3 den manuellen Eingriff in die automatische Regelung, ohne dass hierfür der Automatikmodus unterbrochen werden muss.

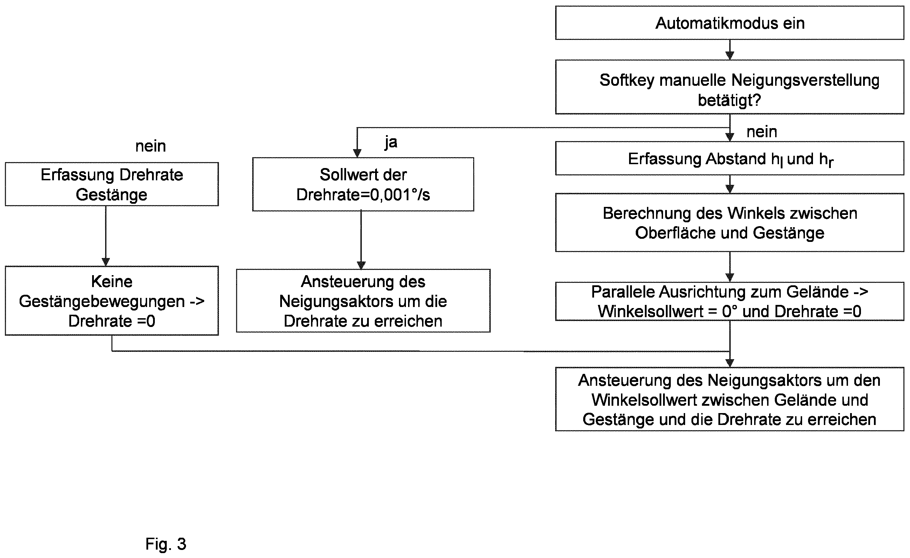

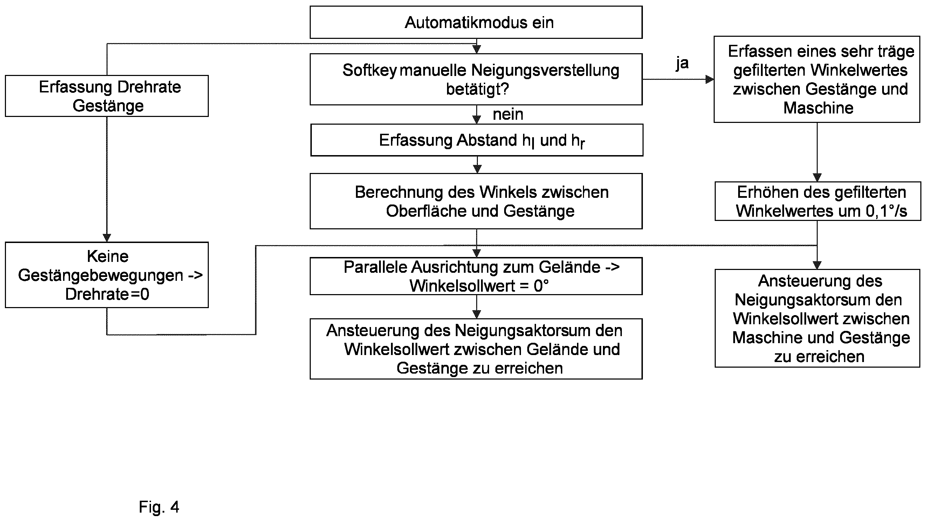

Die Regelung nach dem Automatikmodus erfolgt bei den Ausführungsbeispielen nach den Fig. 2-4 entsprechend und wird nur im Zusammenhang mit dem Ausführungsbeispiel nach Fig. 2 näher beschrieben. Die Erläuterungen im Zusammenhang mit Fig. 2 gelten auch für die Systeme bzw. Flussdiagramme nach den Fig. 3 und 4.

Die Erfindung ist nicht auf die in den Fig. 2-4 beschriebenen Flussdiagramme betreffend den Automatikmodus eingeschränkt. Die automatische Regelung zur Höhen- und Neigungsverstellung des Verteilergestänges 3 kann auf unterschiedliche Weise erfolgen.

Außerdem wird zur Vereinfachung in den Beispielen gemäß den Fig. 2-4 nur von einer Drehung des Gestänges in eine Richtung ausgegangen. Bei einer Drehung in beiden Richtungen ändern sich entsprechend die Vorzeichen.

Wie in Fig. 2 dargestellt, erfolgt bei Aktivierung des Automatikmodus "Automatikmodus ein" eine Erfassung des linken und rechten Abstandes hL, hR zwischen dem Verteilergestänge 3 und dem Boden (Erfassung Abstand hL, hR). Aus den Abstandssignalen wird der aktuelle Winkel zwischen der Bodenoberfläche und dem Verteilergestänge 3 berechnet. Der aktuelle Winkel geht als Istwert in die Automatikregelung ein, der in an sich bekannter Weise mit einem Winkel-Sollwert verglichen wird. Im Automatikmodus ist der Winkel-Sollwert gleich null. Das Verteilergestänge 3 soll parallel zum Boden geführt werden.

Findet keine manuelle Übersteuerung statt und ist der Winkel-Sollwert gleich null, dann wird das Verteilergestänge 3 entsprechend verstellt, um den Winkel-Sollwert zwischen dem Gelände bzw. Boden und dem Verteilergestänge zu erreichen. Hierzu wird ein geeigneter Neigungsaktor, beispielsweise ein Hydraulikzylinder angesteuert. Die Automatikregelung gemäß Fig. 2-4, konkret die Regelung gemäß Fig. 2 umfasst einen weiteren Regel-Parameter, nämlich die Drehrate, die hierfür erfasst wird (Erfassung Drehrate Gestänge). Der Drehraten-Sollwert ist im Rahmen der Automatikregelung auf 0°/s [Grad/Sekunde] eingestellt. Dementsprechend wird das Verteilergestänge 3 im Automatikmodus einerseits auf den Winkel-Sollwert und andererseits auf den Sollwert der Drehrate geregelt.

Im Wesentlichen dieselbe Automatikregelung ist in den Ausführungsbeispielen gemäß Fig. 3 und 4 ebenfalls enthalten.

Für die manuelle Übersteuerung gemäß Fig. 2 wird nach der Berechnung des aktuellen Winkels zwischen Oberfläche und Gestänge abgefragt, ob entweder eine manuelle Eingabe zur Verstellung der Neigung des Verteilergestänges 3 (Softkey) erfolgt ist, oder ob der aktuelle Winkel-Sollwert ungleich null beträgt. Ist die manuelle Neigungsverstellung betätigt worden, wird der Winkel-Sollwert der automatischen Regelung um eine vorgegebene Drehrate verändert. Im Beispiel gemäß Fig. 2 wird der Winkel-Sollwert um 0,1°/s [Grad/Sekunde] angehoben. Insofern erfolgt die Neigungsverstellung im manuellen Übersteuerungsmodus, d.h. bei der manuellen Übersteuerung, auf der Basis der Drehrate, die zur Änderung des Winkel-Sollwerts verwendet wird. Damit wird festgelegt, mit welcher Geschwindigkeit das Verteilergestänge 3 bewegt wird, um den entsprechenden Winkel-Sollwert zu erreichen. Durch die Festlegung der Drehrate im manuellen Übersteuerungsmodus kann der Bediener die Stärke der Reaktion, d.h. die Geschwindigkeit der Neigungsverstellung beeinflussen. Aus dem aufdifferenzierten Winkel-Sollwert wird das Signal zur Verstellung des Neigungsaktors bzw. allgemein das Signal zur Neigungsverstellung des Verteilergestänges 3 abgeleitet.

Ergibt sich bei der Abfrage "Softkey manuelle Neigungsverstellung betätigt oder aktueller Winkel-Sollwert ungleich null" dass der aktuelle Winkel-Sollwert ungleich null ist, wird dieser auf 0 Grad geändert. Die Änderung des Winkel-Sollwerts erfolgt auch in diesem Fall auf der Basis einer vorgegebenen Drehrate, beispielsweise um 0,1 °/s [Grad/Sekunde] (Senken des Winkel-Sollwerts um 0,1 Grad/Sekunde bis maximal 0 Grad). Hieraus wird wieder ein aufdifferenzierter Winkel-Sollwert abgeleitet, der zu dem Signal zur Ansteuerung des Neigungsaktors führt.

Anstelle der Änderung des Winkel-Sollwertes kann ein Abstands-Sollwert auf der Basis einer translatorischen Vertikalgeschwindigkeit des Verteilergestänges 3 geändert werden. Hierfür ist ein entsprechender Geschwindigkeitssensor vorgesehen. Damit lässt sich in analoger Weise die Höhenlage des Verteilergestänges manuell einstellen. Die Regelung erfolgt im Übrigen entsprechend wie in Fig. 2. Die Höhen- und Neigungsregelung kann separat und kombiniert erfolgen.

Zusammengefasst wird bei dem Beispiel gemäß Fig. 2 die Sollwert-Vorgabe des Abstands zur Zielfläche, beispielsweise des Bodens oder des Bestands, die von Abstandssensoren, beispielsweise Ultraschallsensoren im Gestänge erfasst wird, bei Betätigung einer manuellen Eingabeeinrichtung, beispielsweise eines Softkeys, kontinuierlich mit einer vorgegebenen Geschwindigkeit geändert, bis die gewünschte Gestängeposition erreicht ist und der Anwender die manuelle Eingabeeinrichtung deaktiviert. Dabei ist allerdings nur eine Stellung der Neigung und/oder der Höhe des Verteilergestänges 3 relativ zur Bodenkontur möglich.

Bei dem Ausführungsbeispiel gemäß Fig. 3 erfolgt die Neigungsverstellung bzw. Höhenverstellung im manuellen Übersteuerungsmodus relativ zwischen Verteilergestänge 3 und Maschine 2. Die Automatikregelung des Ausführungsbeispiels gemäß Fig. 3 erfolgt entsprechend der Automatikregelung gemäß Fig. 2. Wenn die manuelle Neigungsverstellung betätigt wird, wird der Sollwert der Drehrate des Verteilergestänges 3 auf einen Wert gesetzt, der von null verschieden ist, also auf einen Wert, der größer oder kleiner null ist. Bei dem Beispiel gemäß Fig. 3 wird der Sollwert der Drehrate auf einen Wert von 0,001 °/s [Grad/Sekunde] gesetzt. Andere vorgegebene Sollwerte sind möglich. Das Verteilergestänge 3 wird durch eine entsprechende Ansteuerung des Neigungsaktors verschwenkt, um die vorgegebene Drehrate zu erreichen. Die Abstandsmessung durch die Sensoreinrichtung zur Erfassung des Abstands zwischen dem Verteilergestänge und dem Boden/Pflanzendecke wird deaktiviert oder nur noch für eine Kollisionsabfrage verwendet. Das bedeutet, dass im manuellen Übersteuerungsmodus ausschließlich auf den Wert des Drehratensensors bzw. der Sensoreinrichtung zur Erfassung der Drehrate geregelt wird. Insofern bleibt die automatische Regelung aktiv, insbesondere teilweise aktiv.

Wie in Fig. 3 zu sehen, wird im Automatikmodus zur aktiven Entkopplung des Verteilergestänges 3 von der Maschine die Drehrate des Verteilergestänges 3 auf null geregelt. Im manuellen Übersteuerungsmodus wird dieser Zielwert durch Betätigen der manuellen Eingabevorrichtung um einen bestimmten Faktor erhöht oder abgesenkt, so dass der Sollwert der Drehrate ungleich null ist. Dadurch verdreht sich das Verteilergestänge 3 in eine vorgegebene Richtung.

Das Ausführungsbeispiel gemäß Fig. 3 hat den Vorteil, dass die Neigung des Verteilergestänges 3 relativ zur Maschine 2 unabhängig von der Bodenkontur erfolgt. Die manuelle Übersteuerung lässt sich nicht nur zur Kollisionsvermeidung, sondern auch als Notfunktion verwenden, falls beispielsweise die Abstandssensoren ausfallen.

Das Ausführungsbeispiel gemäß Fig. 4 ermöglicht eine besonders wirksame Überlagerung des Automatikmodus und des manuellen Übersteuerungsmodus, so dass diese gleichzeitig betrieben werden können. Der Automatikmodus läuft wie bei den Ausführungsbeispielen gemäß Fig. 2 und 3 ab, wobei sowohl die beiden Abstände hL und hR als auch die Drehrate des Verteilergestänges 3 erfasst werden. Im Automatikmodus sind sowohl der Winkel-Sollwert zwischen dem Verteilergestänge 3 und dem Gelände gleich null als auch der Sollwert der Drehrate des Verteilergestänges gleich null. Der Automatikmodus wird bei dem Ausführungsbeispiel gemäß Fig. 4 als erster Regelkreis dargestellt, dem ein zweiter Regelkreis überlagerbar ist. Der zweite Regelkreis wird für die manuelle Übersteuerung verwendet und ist langsamer als der erste Regelkreis. Im Flussdiagramm gemäß Fig. 4 erfolgt die Abfrage, ob die manuelle Eingabevorrichtung betätigt ist ("Softkey manuelle Neigungsverstellung betätigt?"). Wenn dies der Fall ist, wird ein träge gefilterter Winkelwert zwischen dem Verteilergestänge 3 und der Maschine 2 erfasst bzw. dieser bereits erfasste Winkelwert bei der manuellen Übersteuerung berücksichtigt. Dabei kann es sich um einen Mittelwert des Winkels zwischen Verteilergestänge 3 und Maschine 2 über einen bestimmten Zeitraum handeln. Der träge gefilterte Winkelwert wird dann im Rahmen der manuellen Übersteuerung um eine vorgegebene Drehrate, beispielsweise um 0,1 Grad/Sekunde geändert, d.h. erhöht oder gesenkt. Im Beispiel gemäß Fig. 4 wird dieser Winkelwert erhöht. Der sich daraus ergebende Winkel-Sollwert zwischen dem Verteilergestänge und der Maschine 2 wird zur Ansteuerung des Neigungsaktors und damit zur manuellen Verstellung des Verteilergestänges 3 verwendet.

Mit anderen Worten wird also der Winkel zwischen der Maschine 2 und dem Verteilergestänge 3 als Referenzwert verwendet, um davon ausgehend eine Verstellung der Neigung des Verteilergestänges um eine bestimmte Drehrate zu erreichen. Da sich zur Entkopplung des Verteilergestänges 3 von den Maschinenbewegungen dieser Winkelwert allerdings immer ändert, fließt bei dem Ausführungsbeispiel gemäß Fig. 4 der Winkel zwischen dem Verteilergestänge 3 und der Maschine 2 in einer überlagerten langsamen Regelung (zweiter Regelkreis) ein. Im inneren Regelkreis (erster Regelkreis) wird der Drehratensensor wie bei den Beispielen gemäß Fig. 2 und 3 verwendet. Dieser entkoppelt mit der Vorgabe einer Gestänge-Drehrate von 0°/s [Grad/Sekunde] das Verteilergestänge 3 von den Maschinenbewegungen. Gleichzeitig wird der aktuelle Winkel zwischen der Maschine 2 und dem Gestänge 3 erfasst, beispielsweise mittels eines Potentiometers. Daraus wird ein Mittelwert gebildet, der auf zeitlich relativ lange Sicht einen bestimmten Wert annehmen soll, der vom Anwender verstellt wird. Auch bei diesem Ausführungsbeispiel ist, wie beim Ausführungsbeispiel gemäß Fig. 3 die manuelle Neigungsverstellung des Verteilergestänges 3 relativ zur Maschine weitgehend unabhängig von der Bodenkontur.

Im Automatikmodus werden Gestängebewegungen von den Maschinenbewegungen durch Neigungsaktoren, wie bspw. hydraulische Neigungszylinder, aktiv entkoppelt. Die Drehrate des Gestänges = 0. Der Neigungszylinder bewegt sich kontinuierlich und entkoppelt das Verteilergestänge 3 von der Maschine 2. Das Verteilergestänge 3 wird mit Abstandssensoren parallel zum Boden/ Pflanzenbestand ausgerichtet.

Im Übersteuerungsmodus werden Gestängebewegungen weiterhin von den Maschinenbewegungen durch die Neigungsaktoren, wie bspw. hydraulische Neigungszylinder, aktiv entkoppelt. Die Drehrate des Gestänges ist ≈ 0. Der Neigungszylinder bewegt sich kontinuierlich. Steuerungseinheit bzw. Datenverarbeitungseinrichtung richtet das Gestänge anhand von Anwendereingaben an dem träge gefilterten Winkelwert relativ zur Maschine aus.

Im Unterschied dazu wäre bei einem ausschließlich manuellen Modus das Gestänge starr mit der Maschine verbunden. Jede Bewegung der Maschine würde direkt in das Gestänge übertragen werden. Der Neigungszylinder könnte über die Steuerungseinheit nur definiert nach links oder rechts verfahren werden, um das Gestänge zu verdrehen, und wäre im Übrigen starr.

Die manuelle Übersteuerung der Höhenregelung, die in Fig. 4 nicht dargestellt ist, erfolgt auf analoge Weise. Auch hierbei wird die Höhe zwischen dem Gestänge und der Maschine, d.h. der Abstand zwischen Gestänge und Maschine über einen längeren Zeitraum erfasst. Der sich daraus bildende Mittelwert wird bei der Regelung verwendet, d.h. der Mittelwert fließt in die Regelung ein. Die Entkopplung der Maschinenbewegungen erfolgt dann, wie bei der Neigungsverstellung über eine schnell reagierende Druckregelung des Hydraulikdrucks in den Zylindern.

## Patentansprüche

1. Regel- und/oder Steuersystem für eine landwirtschaftliche Maschine (2) mit einem Verteilergestänge (3) zum Ausbringen von Material, wie Düngemittel, Pflanzenschutzmittel oder Saatgut, das um eine mittig zum Verteilergestänge (3) angeordnete und in Fahrtrichtung verlaufende Drehachse verschwenkbar ist, mit wenigstens einer ersten Sensoreinrichtung zur Ermittlung des Boden- und/oder Pflanzenabstands vom Verteilergestänge und einer Datenverarbeitungseinrichtung zur Verarbeitung der Sensorsignale, wobei die Datenverarbeitungseinrichtung für einen Automatikmodus zur Höhen- und/oder Neigungsverstellung des Verteilergestänges (3) konfiguriert ist, wobei, wenigstens eine Sensoreinrichtung zur Ermittlung des Winkels zwischen der Maschine (2) und dem Verteilergestänge (3) und/oder eine Sensoreinrichtung zur Ermittlung des vertikalen Abstands zwischen der Maschine (2) und dem Verteilergestänge (3), wobei die Datenverarbeitungseinrichtung für einen Übersteuerungsmodus, insbesondere einen manuellen Übersteuerungsmodus, zur Höhen- und/oder Neigungsverstellung des Verteilergestänges (3) konfiguriert und der Automatikmodus im Übersteuerungsmodus aktiv ist, **dadurch gekennzeichnet, dass** die Neigungsverstellung des Verteilergestänges (3) wenigstens im Übersteuerungsmodus der Datenverarbeitungseinrichtung auf der Basis des Winkels zwischen der Maschine (2) und dem Verteilergestänge (3) und die Höhenverstellung des Verteilergestänges (3) wenigstens im Übersteuerungsmodus der Datenverarbeitungseinrichtung auf der Basis des vertikalen Abstands zwischen der Maschine (2) und dem Verteilergestänge (3) erfolgt.

2. System nach Anspruch 1, **dadurch gekennzeichnet, dass** im Automatikmodus wenigstens zwei unterschiedliche Regelparameter vorgesehen sind, von denen ein Regelparameter im Übersteuerungsmodus übersteuert wird.

3. System nach Anspruch 1 oder 2, **gekennzeichnet durch**, wenigstens eine Sensoreinrichtung zur Ermittlung der Drehrate des Verteilergestänge (3) und/oder eine Sensoreinrichtung zur Ermittlung der translatorischen Vertikalgeschwindigkeit des Verteilergestänges (3), wobei die Höhen- und/oder Neigungsverstellung des Verteilergestänges (3) wenigstens im Übersteuerungsmodus der Datenverarbeitungseinrichtung auf der Basis der Drehrate des Verteilergestänges (3) und/oder auf der Basis der translatorischen Vertikalgeschwindigkeit des Verteilergestänges (3) erfolgt.

4. System nach einem der vorhergehenden Ansprüche, insbesondere nach Anspruch 3, **dadurch gekennzeichnet, dass** die Datenverarbeitungseinrichtung einen Sollwert des Winkels zwischen dem Verteilergestänge (3) und der Boden- oder Pflanzenoberfläche im Automatikmodus bei einer Aktivierung des Übersteuerungsmodus um eine vorgegebene Drehrate des Verteilergestänges (3) ändert.

5. System nach einem der vorhergehenden Ansprüche, **dadurch gekennzeichnet, dass** die Datenverarbeitungseinrichtung im Übersteuerungsmodus einen Sollwert des Abstands zwischen dem Verteilergestänge (3) und der Boden- oder Pflanzenoberfläche um eine vorgegebene translatorische Vertikalgeschwindigkeit des Verteilergestänge (3) ändert.

6. System nach einem der vorhergehenden Ansprüche, **dadurch gekennzeichnet, dass** die Datenverarbeitungseinrichtung im Übersteuerungsmodus einen Sollwert der Drehrate auf einen Wert setzt, der von Null verschieden ist.

7. System nach einem der vorhergehenden Ansprüche, **dadurch gekennzeichnet, dass** die Datenverarbeitungseinrichtung im Übersteuerungsmodus einen Sollwert der translatorischen Vertikalgeschwindigkeit auf einen Wert setzt, der von Null verschieden ist.

8. System nach einem der vorhergehenden Ansprüche **dadurch gekennzeichnet, dass** die Datenverarbeitungseinrichtung nach einer Deaktivierung des Übersteuerungsmodus in den Automatikmodus wechselt.

9. System nach einem der vorhergehenden Ansprüche, insbesondere nach einem der Ansprüche 3 bis 5, **dadurch gekennzeichnet, dass** die Datenverarbeitungseinrichtung wenigstens zwei Regelkreise aufweist, wobei ein Sollwert des zweiten Regelkreises im Übersteuerungsmodus einstellbar ist.

10. System nach Anspruch 9, **dadurch gekennzeichnet, dass** der zweite Regelkreis eine langsamere Regelung als der erste Regelkreis bildet.

11. System nach Anspruch 9 oder 10, **dadurch gekennzeichnet, dass** der erste Regelkreis eine Sensoreinrichtung zur Ermittlung der Drehrate des Verteilergestänges (3) und der zweite Regelkreis eine Sensoreinrichtung zur Ermittlung des Winkels zwischen der Maschine (2) und dem Verteilergestänge (3) und/oder eine Sensoreinrichtung zur Ermittlung des vertikalen Abstands zwischen der Maschine (2) und dem Verteilergestänge (3) aufweisen.

12. System nach Anspruch 11, **dadurch gekennzeichnet, dass** der erste Regelkreis einen Sollwert der Drehrate verwendet, der Null entspricht, und der zweite Regelkreis einen Mittelwert des Winkels zwischen der Maschine (2) und dem Verteilergestänge (3) und/oder einen Mittelwert des vertikalen Abstands zwischen der Maschine (2) und dem Verteilergestänge (3) verwendet, der von Null verschieden ist.

13. System nach einem der vorhergehenden Ansprüche **dadurch gekennzeichnet, dass** die Sensoreinrichtung zur Ermittlung des Boden- und/oder Pflanzenabstands, insbesondere Ultraschallsensoren, im Übersteuerungsmodus aktiv ist/sind.

14. System nach einem der vorhergehenden Ansprüche **dadurch gekennzeichnet, dass** die Datenverarbeitungseinrichtung verschiedene Übersteuerungsmodi aufweist, die wählbar sind.

15. System nach einem der vorhergehenden Ansprüche **dadurch gekennzeichnet, dass** zur Höhen- und/oder Neigungsverstellung des Verteilergestänges (3) konfiguriert ist, wobei die Höhen- und/oder Neigungsverstellung des Verteilergestänges (3) wenigstens im Übersteuerungsmodus der Datenverarbeitungseinrichtung auf der Basis der Drehrate des Verteilergestänges (3) und/oder auf der Basis der translatorischen Vertikalgeschwindigkeit des Verteilergestänges (3) erfolgt.

16. Landwirtschaftliche Maschine zum Ausbringen von Material, wie Düngemittel, Pflanzenschutzmittel oder Saatgut, mit einem Verteilergestänge (3) und einem Regel- und/oder Steuersystem nach einem der vorhergehenden Ansprüche.

17. Verfahren zum Betreiben einer landwirtschaftlichen Maschine (2), bei dem Material, wie Düngemittel, Pflanzenschutzmittel oder Saatgut, aus einem Vorratsbehälter (5) durch ein Verteilergestänge (3) ausgebracht wird, wobei im Automatikmodus die Gesamthöhe und/oder Gesamtneigung des Verteilergestänges verstellt und im Übersteuerungsmodus wenigstens einen Regelparameter des Automatikmodus übersteuert, insbesondere manuell übersteuert wird, wobei der Automatikmodus im Übersteuerungsmodus aktiv ist, wobei die Höhe und/oder Neigung des Verteilergestänges (3) in einem Automatikmodus und in einem Übersteuerungsmodus, insbesondere einem manuellen Übersteuerungsmodus, verstellt wird/werden, **dadurch gekennzeichnet, dass** die Neigung des Verteilergestänges (3) im Übersteuerungsmodus auf der Basis des Winkels zwischen der Maschine (2) und dem Verteilergestänge (3) verstellt wird und die Höhe des Verteilergestänges im Übersteuerungsmodus auf der Basis des vertikalen Abstands zwischen der Maschine (2) und dem Verteilergestänge (3) verstellt wird.

18. Verfahren nach Anspruch 16 oder 17, **dadurch gekennzeichnet, dass** die Neigung im Übersteuerungsmodus auf der Basis der Drehrate des Verteilergestänges (3) verstellt wird und/oder die Höhe im Übersteuerungsmodus auf der Basis der translatorischen Vertikalgeschwindigkeit des Verteilergestänges (3) verstellt wird.

## Claims

1. Closed-loop and/or open-loop control system for an agricultural machine (2) comprising a distributor boom (3) for spreading material, such as fertilizers, plant protection products or seeds, which boom can be pivoted about an axis of rotation arranged centrally in relation to the distributor boom (3) and extending in the direction of travel, the system comprising at least a first sensor device for determining the ground distance and/or plant distance from the distributor boom, and a data processing device for processing the sensor signals, the data processing device being configured for an automatic mode for adjusting the height and/or inclination of the distributor boom (3), at least one sensor device for determining the angle between the machine (2) and the distributor boom (3) and/or a sensor device for determining the vertical distance between the machine (2) and the distributor boom (3), the data processing device being configured for an override mode, in particular a manual override mode, for adjusting the height and/or inclination of the distributor boom (3), and the automatic mode being active in the override mode, **characterized in that** the inclination of the distributor boom (3) is adjusted at least in the override mode of the data processing device on the basis of the angle between the machine (2) and the distributor boom (3) and the height of the distributor boom (3) is adjusted at least in the override mode of the data processing device on the basis of the vertical distance between the machine (2) and the distributor boom (3).

2. System according to claim 1, **characterized in that** in the automatic mode, at least two different control parameters are provided, of which one control parameter is overridden in the override mode.

3. System according to either claim 1 or claim 2, **characterized by** at least one sensor device for determining the angular speed of the distributor boom (3) and/or a sensor device for determining the translational vertical speed of the distributor boom (3), the height and/or inclination of the distributor boom (3) being adjusted at least in the override mode of the data processing device on the basis of the angular speed of the distributor boom (3) and/or on the basis of the translational vertical speed of the distributor boom (3).

4. System according to any of the preceding claims, in particular according to claim 3, **characterized in that** the data processing device changes, by a predetermined angular speed of the distributor boom (3), a setpoint of the angle between the distributor boom (3) and the ground surface or plant surface in the automatic mode when the override mode is activated.

5. System according to any of the preceding claims, **characterized in that** the data processing device changes, in the override mode, a setpoint of the distance between the distributor boom (3) and the ground surface or plant surface by a predetermined translational vertical speed of the distributor boom (3).

6. System according to any of the preceding claims, **characterized in that** the data processing device sets, in the override mode, a setpoint of the angular speed to a value that is different from zero.

7. System according to any of the preceding claims, **characterized in that** the data processing device sets, in the override mode, a setpoint of the translational vertical speed to a value that is different from zero.

8. System according to any of the preceding claims, **characterized in that** the data processing device enters the automatic mode after the override mode has been deactivated.

9. System according to any of the preceding claims, in particular according to any of claims 3 to 5, **characterized in that** the data processing device has at least two control loops, it being possible to set a setpoint of the second control loop in the override mode.

10. System according to claim 9, **characterized in that** the second control loop is a slower form of control than the first control loop.

11. System according to claim 9 or 10, **characterized in that** the first control loop has a sensor device for determining the angular speed of the distributor boom (3) and the second control loop has a sensor device for determining the angle between the machine (2) and the distributor boom (3) and/or a sensor device for determining the vertical distance between the machine (2) and the distributor boom (3).

12. System according to claim 11, **characterized in that** the first control loop uses a setpoint of the angular speed that corresponds to zero, and the second control loop uses a mean value of the angle between the machine (2) and the distributor boom (3) and/or a mean value of the vertical distance between the machine (2) and the distributor boom (3) that is different from zero.

13. System according to any of the preceding claims, **characterized in that** the sensor device for determining the ground distance and/or plant distance, in particular ultrasonic sensors, is/are active in the override mode.

14. System according to any of the preceding claims, **characterized in that** the data processing device has different override modes that can be selected.

15. System according to any of the preceding claims, **characterized in that** is configured to adjust the height and/or inclination of the distributor boom (3), the height and/or inclination of the distributor boom (3) being adjusted at least in the override mode of the data processing device on the basis of the angular speed of the distributor boom (3) and/or on the basis of the translational vertical speed of the distributor boom (3).

16. Agricultural machine for spreading material, such as fertilizers, plant protection products or seeds, comprising a distributor boom (3) and a closed-loop and/or open-loop control system according to any of the preceding claims.

17. Method for operating an agricultural machine (2), in which method material, such as fertilizers, plant protection products or seeds, is spread from a storage container (5) through a distributor boom (3), the total height and/or total inclination of the distributor boom being adjusted in the automatic mode and at least one control parameter of the automatic mode being overridden, in particular manually overridden, in the override mode, the automatic mode being active in the override mode, the height and/or inclination of the distributor boom (3) being adjusted in an automatic mode and in an override mode, in particular a manual override mode, **characterized in that** the inclination of the distributor boom (3) is adjusted in the override mode on the basis of the angle between the machine (2) and the distributor boom (3) and the height of the distributor boom is adjusted in the override mode on the basis of the vertical distance between the machine (2) and the distributor boom (3).

18. Method according to either claim 16 or claim 17, **characterized in that** the inclination is adjusted in the override mode on the basis of the angular speed of the distributor boom (3) and/or the height is adjusted in the override mode on the basis of the translational vertical speed of the distributor boom (3).

## Revendications

1. Système de régulation et/ou de commande pour une machine agricole (2) présentant une rampe d'épandage (3) destinée à l'épandage de matière, telle que des engrais, des agents de phytoprotection ou des semences, qui peut pivoter autour d'un axe de rotation agencé au centre par rapport à la rampe d'épandage (3) et qui s'étend dans la direction de déplacement, présentant au moins un premier dispositif capteur, destiné à déterminer la distance entre le sol et/ou les plantes et la rampe d'épandage, et un dispositif de traitement de données destiné à traiter des signaux du capteur, le dispositif de traitement de données étant configuré pour un mode automatique pour le réglage de la hauteur et/ou de l'inclinaison de la rampe d'épandage (3), au moins un dispositif de capteur destiné à déterminer l'angle entre la machine (2) et la rampe d'épandage (3) et/ou un dispositif capteur destiné à déterminer la distance verticale entre la machine (2) et la rampe d'épandage (3), le dispositif de traitement de données étant configuré pour un mode de commande prioritaire, en particulier un mode manuel de commande prioritaire, pour le réglage de la hauteur et/ou de l'inclinaison de la rampe d'épandage (3) et le mode automatique étant actif dans le mode de commande prioritaire, **caractérisé en ce que** le réglage de l'inclinaison de la rampe d'épandage (3), au moins dans le mode de commande prioritaire du dispositif de traitement de données, a lieu sur la base de l'angle entre la machine (2) et la rampe d'épandage (3) et le réglage de la hauteur de la rampe d'épandage (3), au moins dans le mode de commande prioritaire du dispositif de traitement de données, a lieu sur la base de la distance verticale entre la machine (2) et la rampe d'épandage (3).

2. Système selon la revendication 1, **caractérisé en ce que**, dans le mode automatique, au moins deux paramètres de régulation différents sont prévus, dont un paramètre de régulation est commandé en priorité dans le mode de commande prioritaire.

3. Système selon la revendication 1 ou 2, **caractérisé par** au moins un dispositif de capteur destiné à déterminer la vitesse de rotation de la rampe d'épandage (3) et/ou par un dispositif de capteur destiné à déterminer la vitesse verticale de translation de la rampe d'épandage (3), le réglage de la hauteur et/ou de l'inclinaison de la rampe d'épandage (3) ayant lieu, au moins dans le mode de commande prioritaire du dispositif de traitement de données, sur la base de la vitesse de rotation de la rampe d'épandage (3) et/ou sur la base de la vitesse verticale de translation de la rampe d'épandage (3).

4. Système selon l'une quelconque des revendications précédentes, en particulier selon la revendication 3, **caractérisé en ce que** le dispositif de traitement de données modifie une valeur de consigne de l'angle entre la rampe d'épandage (3) et la surface du sol ou des plantes dans le mode automatique lors de l'activation du mode de commande prioritaire d'une vitesse de rotation spécifiée de la rampe d'épandage (3).

5. Système selon l'une quelconque des revendications précédentes, **caractérisé en ce que** le dispositif de traitement de données, dans le mode de commande prioritaire, modifie une valeur de consigne de la distance entre la rampe d'épandage (3) et la surface du sol ou des plantes d'une vitesse verticale de translation spécifiée de la rampe d'épandage (3).

6. Système selon l'une quelconque des revendications précédentes, **caractérisé en ce que** le dispositif de traitement de données, dans le mode de commande prioritaire, fixe une valeur de consigne de la vitesse de rotation à une valeur qui est différente de zéro.

7. Système selon l'une quelconque des revendications précédentes, **caractérisé en ce que** le dispositif de traitement de données, dans le mode de commande prioritaire, fixe une valeur de consigne de la vitesse verticale de translation à une valeur qui est différente de zéro.

8. Système selon l'une quelconque des revendications précédentes, **caractérisé en ce que** le dispositif de traitement de données, après une désactivation du mode de commande prioritaire, passe dans le mode automatique.

9. Système selon l'une quelconque des revendications précédentes, en particulier selon l'une quelconque des revendications 3 à 5, **caractérisé en ce que** le dispositif de traitement de données présente au moins deux circuits de régulation, une valeur de consigne du deuxième circuit de régulation étant réglable dans le mode de commande prioritaire.

10. Système selon la revendication 9, **caractérisé en ce que** le deuxième circuit de régulation fournit une régulation plus lente que celle du premier circuit de régulation.

11. Système selon la revendication 9 ou 10, **caractérisé en ce que** le premier circuit de régulation présente un dispositif de capteur destiné à déterminer la vitesse de rotation de la rampe d'épandage (3) et le deuxième circuit de régulation présente un dispositif de capteur destiné à déterminer l'angle entre la machine (2) et la rampe d'épandage (3) et/ou un dispositif de capteur destiné à déterminer la distance verticale entre la machine (2) et la rampe d'épandage (3).

12. Système selon la revendication 11, **caractérisé en ce que** le premier circuit de régulation utilise une valeur de consigne de la vitesse de rotation qui correspond à zéro et le deuxième circuit de régulation utilise une valeur moyenne de l'angle entre la machine (2) et la rampe d'épandage (3) et/ou une valeur moyenne de la distance verticale entre la machine (2) et la rampe d'épandage (3), qui sont différentes de zéro.

13. Système selon l'une quelconque des revendications précédentes, **caractérisé en ce que** le dispositif de capteur destiné à déterminer la distance par rapport au sol et/ou aux plantes, en particulier des capteurs à ultrasons, est/sont actif(s) dans le mode de commande prioritaire.

14. Système selon l'une quelconque des revendications précédentes, **caractérisé en ce que** le dispositif de traitement de données présente différents modes de commande prioritaire, qui sont sélectionnables.

15. Système selon l'une quelconque des revendications précédentes, **caractérisé en ce qu'**il est configuré pour le réglage de la hauteur et/ou de l'inclinaison de la rampe d'épandage (3), le réglage de la hauteur et/ou de l'inclinaison de la rampe d'épandage (3) ayant lieu, au moins dans le mode de commande prioritaire du dispositif de traitement de données, sur la base de la vitesse de rotation de la rampe d'épandage (3) et/ou sur la base de la vitesse verticale de translation de la rampe d'épandage (3).

16. Machine agricole destinée à l'épandage de matière, telle que des engrais, des agents de phytoprotection ou des semences, comprenant une rampe d'épandage (3) et un système de commande et/ou de régulation selon l'une quelconque des revendications précédentes.

17. Procédé pour le fonctionnement d'une machine agricole (2), dans lequel une matière, telle que des engrais, des agents de phytoprotection ou des semences, est épandue à partir d'un réservoir (5) par une rampe d'épandage (3), dans lequel, dans le mode automatique, la hauteur totale et/ou l'inclinaison totale de la rampe d'épandage est/sont réglée(s) et, dans le mode de commande prioritaire, au moins un paramètre de régulation du mode automatique est commandé en priorité, en particulier commandé manuellement en priorité, le mode automatique étant actif dans le mode de commande prioritaire, la hauteur et/ou l'inclinaison de la rampe d'épandage (3) étant réglée(s) dans un mode automatique et dans un mode de commande prioritaire, en particulier dans un mode manuel de commande prioritaire, **caractérisé en ce que** l'inclinaison de la rampe d'épandage (3), dans le mode de commande prioritaire, est réglée sur la base de l'angle entre la machine (2) et la rampe d'épandage (3) et la hauteur de la rampe d'épandage, dans le mode de commande prioritaire, est réglée sur la base de la distance verticale entre la machine (2) et la rampe d'épandage (3).

18. Procédé selon la revendication 16 ou 17, **caractérisé en ce que** l'inclinaison, dans le mode de commande prioritaire, est réglée sur la base de la vitesse de rotation de la rampe d'épandage (3) et/ou la hauteur, dans le mode de commande prioritaire, est réglée sur la base de la vitesse verticale de translation de la rampe d'épandage (3).
